# EUROPEAN PATENT APPLICATION

(11) **EP 1 522 342 A1**
(43) Date of publication of application: **13.04.2005**
(21) Application number: 02751632.7
(22) Date of filing: 18.07.2002
(51) Int. Cl.: B01J 35/02, B01J 23/08, B01J 23/10, B01J 23/00, B01J 35/00

(54) **PHOTOCATALYST EXHIBITING CATALYTIC ACTIVITY EVEN IN VISIBLE LIGHT REGION**

(30) Priority: 08.08.2001 JP 2001241386; 25.06.2002 JP 2002184094
(71) Applicant: SUMITOMO METAL MINING COMPANY LIMITED, Tokyo 105-8716 (JP)
(72) Inventor: MATSUO, Shinya, Suite-shi, Osaka 565-0871 (JP); OMATA, Takahisa, Suite-shi, Osaka 565-0871 (JP)
(74) Representative: Leson, Thomas Johannes Alois, Dipl.-Ing.
(86) International application number: PCT/JP2002/007301
(87) International publication number: WO 2003/013727

(57) **Abstract**

The photocatalyst according to the present invention which exhibits a high catalytic function in the visible-light range comprises an oxide composite having a junction formed by oxide semiconductors (I) and (II) which have photocatalytic properties with each other and whose energy levels of electrons at the bottom of the conduction band and energy levels of electrons at the top of the valence band in an energy band structure, based on the vacuum levels, differ from each other; at least one of the oxide semiconductors having photocatalytic properties even in the visible-light range. The oxide semiconductor (I) having photocatalytic properties even in the visible-light range is exemplified by a pyrochlore-related structural oxide Ce₂Zr₂O_{8.0}, and the oxide semiconductor (II) by an anatase-type titanium oxide.

## Description

### TECHNICAL FIELD

This invention relates to a photocatalyst comprised of an oxide composite, and more particularly to a photocatalyst having a catalytic activity even in the visible-light range.

### BACKGROUND ART

In recent years, positively utilizing the high oxidizing power and reducing power that are attributable to photocatalysts, research and development are being put forward on photocatalysts so that they can be put into practical use in various fields ranging from global-scale environmental purification such as purification of polluted air and polluted water and up to domestic-scale environmental purification such as deodorizing, stainproofing and antimicrobial treatment. Then, in many cases, these are directed to researches on compounds having photocatalytic action. Where promoters cr carriers which accelerate reaction are used in combination, noble metals such as Pt and Rh and transition metal oxides such as NiO have been used on the basis of researches on conventional catalysts.

To state the matter below specifically, for example, anatase-type titanium oxide is known as a most typical oxide having photocatalytic action, and has already been put into practical use as deodorants, antimicrobial agents and stainproofing agents. However, those for which the titanium oxide exhibits the performance as a photocatalyst are only ultraviolet rays holding only 4% of sunlight. Accordingly, various improvements are attempted aiming at how the titanium oxide be made highly functional in the open air and be made responsive in the visible-light range. For example, various attempts have been made in Japan and abroad, including a method in which electrons are injected into titanium oxide from an adsorbed coloring matter in the state of its excitation, formed by making titanium oxide adsorb a coloring matter and making the coloring matter absorb visible light, a method in which metallic ions such as Cr, V, Mn, Fe or Ni ions are chemically injected into titanium oxide, a method in which oxygen deficiency is introduced into titanium oxide by plasma irradiation, and a method in which ions of a different species are introduced into titanium oxide. All of these methods, however, have problems that it is difficult to effect uniform dispersion, that the photocatalytic activity may lower because of the recombination of electrons and holes and that a high cost is required for making adjustment, and have not been put into use in an industrial scale.

Meanwhile, perovskite-type oxides attract notice recently as having a high catalytic activity. For example, in Japanese Patent Application Laid-open No. 7-24329, LaFeO₃ represented by the general formula: A³⁺B³⁺O₃ and SrMnOₓ represented by the general formula: A²⁺B³⁺Oₓ are proposed. In reality, however, any high catalytic activity has not been attained.

Researches are also energetically made on layered perovskite-type oxides. For example, in Japanese Patent Application Laid-open No. 10-244164, layered perovskite-type ABCO₄ is proposed. In Japanese Patent Application Laid-open No. 8-196912, a KLaCa₂Nb₃O₁₀-system compound oxide is proposed. Also, in Japanese Patent Application Laid-open No. 11-139826, KCa₂Nb₃O₁₀ is proposed. However, the principles and production processes of these are complicate and also there is a problem on the chemical stability of resultant oxides. Hence, these have not been put into use in an industrial scale.

In order to accelerate photocatalytic reaction which takes place at particle surfaces of these oxides having photocatalytic activity, it is also common to add as promoters noble metals such as Pt and Rh and transition metal oxides such as NiO and RuO₂ as mentioned previously. It, however, is not the case that these promoters have photocatalytic activity. These do not influence any wavelength range of the light to which the compound itself having photocatalytic action is responsive. In the case of NiO, it also has a problem that it must be used under complicate conditions such that it is first reduced and then oxidized to put it into use.

The present invention was made taking account of such problems. It is a subject of the present invention to provide an inexpensive photocatalyst which exhibits photocatalytic activity in the visible-light range on the basis of a simple and new mechanism.

Accordingly, in order to settle the above subject, the present inventors repeated extensive studies on the performance of photocatalysts. As the result, they have discovered the following: In a pyrochlore-related structural oxide which is represented by the compositional formula (III) : A₂₋ₓB₂₊ₓO_{8-2δ} and in which oxygen ions have been inserted to at least one of the position of oxygen deficiency and the interstitial position, as viewed from a fluorite-type structure of a pyrochlore-type oxide represented by the compositional formula (IV): A₂₋ₓB₂₊ₓO_{7+(x/2)+y} (provided that -0.4 < x < +0.6 and -0.2 < y < +0.2) in which A ions and B ions which may assume a plurality of valences are each regularly arranged, this oxide can be made to have a catalytic activity even in the visible-light range by utilizing the high activity of oxygen ions having been inserted, and also by changing the amount of oxygen ions to be inserted, to change the energy band gap and the defect levels ascribable to the oxygen ions having been inserted.

They have also discovered the following: The above pyrochlore-related structural oxide may be made to adhere and join to particles of titanium oxide, zinc oxide, tin oxide, zirconium oxide, strontium titanate or the like which is capable of acting in the near-ultraviolet range as reported in the past, to form a junction, where electrons and holes flow in one direction to each other via the junction, due to the fact that energy levels of electrons at the bottom of the conduction band and those at the top of the valence band in an energy band structure, based on the vacuum levels, differ from each other between the respective semiconductors (i.e., the pyrochlore-related structural oxide and the titanium oxide, zinc oxide, tin oxide, zirconium oxide, strontium titanate or the like). This enable spatial separation of electrons from holes, and hence enables control of the recombination of electrons and holes. Moreover, the fact that the molecules and ions which participate in the photocatalytic reaction are readily adsorbed by the pyrochlore-related structural oxide can be utilized, and also spatial separation can be made for the position of reaction of the photocatalytic reaction in which these electrons and holes participate. Hence, cooperative action of these makes the photocatalyst have a high catalytic activity.

As a result of further studies on the photocatalytic action and on the flow of electrons and holes at the junction, they have still also discovered that the energy of light in the visible light region is effectively utilized and further that the energy of the electrons and holes which contribute to the reaction is enhanced and an ideal condition as photocatalytic performance is produced at the junction of the above semiconductor oxides (i.e., an oxide composite comprised of the pyrochlore-related structural oxide and the titanium oxide, zinc oxide, tin oxide, zirconium oxide, strontium titanate or the like).

They have further discovered the following: Without limitation to the oxide composite comprised of the pyrochlore-related structural oxide represented by the compositional formula (III): A₂₋ₓB₂₊ₓO_{8-2δ} and the titanium oxide, zinc oxide, tin oxide, zirconium oxide, strontium titanate or the like, an oxide composite having a junction formed by oxide semiconductors (I) and (II) whose energy levels of electrons at the bottom of the conduction band and energy levels of electrons at the top of the valence band in an energy band structure, based on the vacuum levels, differ from each other also function likewise.

Incidentally, any study has never been made such that the two types of compound semiconductors whose energy levels of electrons at the bottom of the conduction band and energy levels of electrons at the top of the valence band in an energy band structure, based on the vacuum levels, differ from each other, which are compound semiconductors one of which has a relatively weak photocatalytic action and the other of which has a better photocatalytic action in a shorter wavelength range, are made into a composite so that the photocatalytic performance can cooperatively be improved, much less any study at all such that the flows of electrons and holes at the junction are utilized to prepare a high-performance photocatalyst. The present invention has been accomplished on the bases of the above technical discoveries.

### DISCLOSURE OF THE INVENTION

The present invention is a photocatalyst having catalytic activity even in the visible-light range; the photocatalyst comprising an oxide composite having a junction formed by oxide semiconductors (I) and (II) which have photocatalytic properties with each other and whose energy levels of electrons at the bottom of the conduction band and energy levels of electrons at the top of the valence band in an energy band structure, based on the vacuum levels, differ from each other; at least one of the oxide semiconductors having photocatalytic properties even in the visible-light range.

Then, in the photocatalyst according to the present invention, electrons and holes flow in one direction to each other via the junction, due to the fact that energy levels of electrons at the bottom of the conduction band and those at the top of the valence band in an energy band structure, based on the vacuum levels, differ from each other between the oxide semiconductors (I) and (II), and hence this enables spatial separation of electrons from holes and enables control of the recombination of electrons and holes. This further enables spatial separation of the position of reaction of the photocatalytic reaction in which these electrons and holes participate. Hence, cooperative action of these can make the photocatalyst have a high catalytic activity up to the visible-light range.

The oxide semiconductor (II) may also preferably have photocatalytic properties in a shorter wavelength range than the oxide semiconductor (I), and the oxide semiconductor (I) having photocatalytic properties even in the visible-light range may also preferably have properties that it adsorbs molecules and ions which participate in photocatalytic reaction at the time of irradiation by light.

The above oxide composite may also be obtained by blending the oxide semiconductors (I) and (II) in a weight ratio of Z:(1-Z) (provided that 0 < Z < 1), followed by firing under conditions of 300°C to 1,200°C.

### BRIEF DESCRIPTION OF THE DRAWINGS

Fig. 1 illustrates the construction of a light irradiation laboratory equipment used to evaluate the catalytic activity of photocatalysts according to Examples 1 to 6 and Comparative Example.
Fig. 2 is a graph showing the relationship between irradiation time and absorbance in photo-bleaching.
Fig. 3 is a graph showing the relationship between irradiation time and absorbance in photo-bleaching.
Fig. 4 is a graph showing the relationship between irradiation time and absorbance in photo-bleaching.
Fig. 5 illustrates energy band structure showing energy levels Ec of electrons at the bottom of the conduction band and energy levels Ev of electrons at the top of the valence band in an energy band structure, based on the vacuum levels.
Fig. 6 illustrates a crystal structure showing 1/8 of a unit lattice of a pyrochlore-type oxide represented by the general formula: A₂₋ₓB₂₊ₓO_{7+(x/2)+y} (provided that -0.4 < x < +0.6 and -0.2 < y < +0.2), in which the position indicated by a double circle shows the position of oxygen deficiency as viewed from a fluorite-type structure.
Fig. 7 (A) is a conceptual illustration digrammatically showing the mechanism of the flows of electrons and holes via a junction of the photocatalyst according to the present invention, and Fig. 7 (B) illustrates energy band structure at the junction of the photocatalyst according to the present invention.

### BEST MODES FOR PRACTICING THE INVENTION

To describe the present invention in greater detail, it is described with reference to the accompanying drawings.

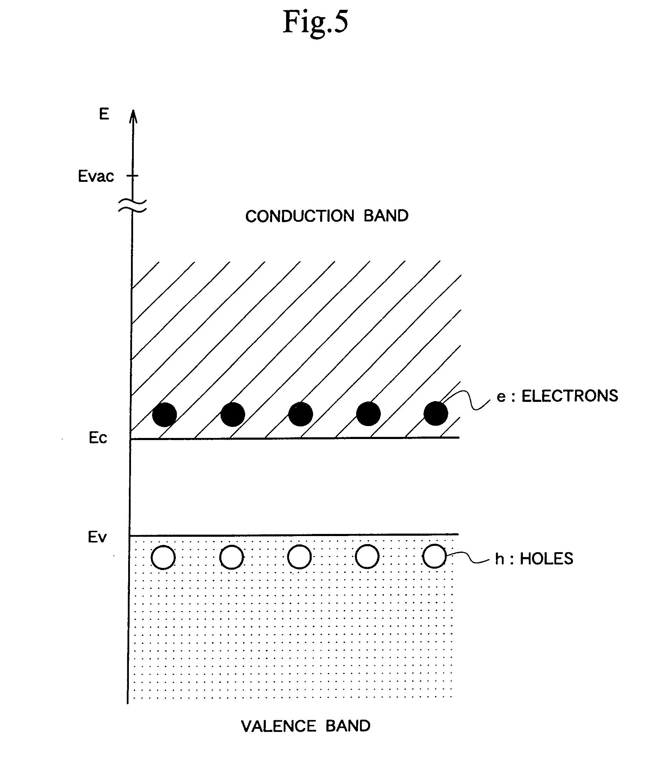

In the first place, the photocatalyst according to the present invention comprises an oxide composite having a junction formed by oxide semiconductors (I) and (II) which have photocatalytic properties with each other and whose energy levels Ec of electrons at the bottom of the conduction band and energy levels Ev of electrons at the top of the valence band in an energy band structure, based on the vacuum levels, differ from each other; at least one of the oxide semiconductors having photocatalytic properties even in the visible-light range; the energy band structure being the energy band structure shown in Fig.5.

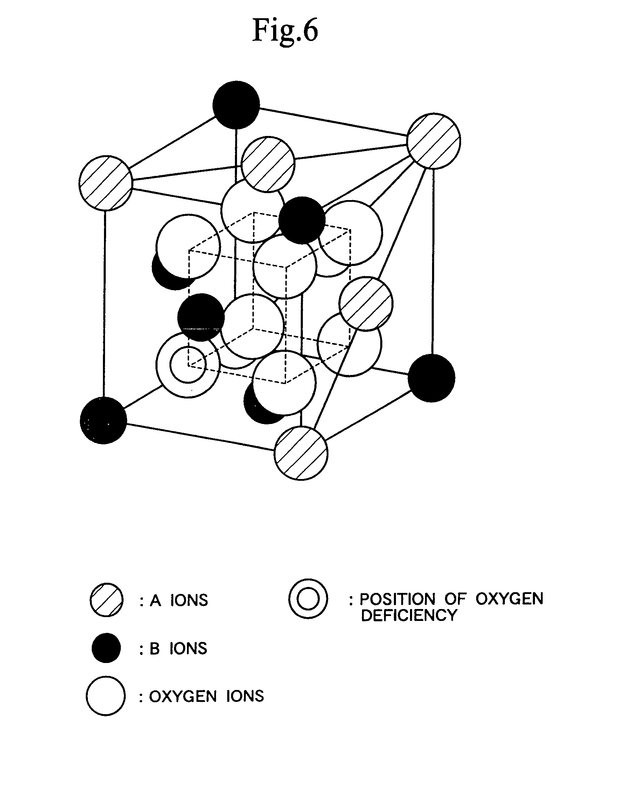

Then, the oxide semiconductor (I) having photocatalytic properties even in the visible-light range, constituting one component of the oxide composite may include, e.g.,:
a pyrochlore-related structural oxide which is represented by the compositional formula (III): A₂₋ₓB₂₊ₓO_{8-2δ} (provided that -0.4 < x < +0.6 and -0.5 < 2δ < +0.5) and in which oxygen ions have been inserted to at least one of the position of oxygen deficiency (see Fig. 6) and the interstitial position, as viewed from a fluorite-type structure of a pyrochlore-type oxide represented by the compositional formula (IV): A₂₋ₓB₂₊ₓO_{7+(x/2)+y} (provided that -0.4 < x < +0.6 and -0.2 < y < +0.2) in which A ions and B ions which may assume a plurality of valences are each regularly arranged;
a pyrochlore-type oxide represented by the compositional formula (IV): A₂₋ₓB₂₊ₓO_{7+(x/2)+y} (provided that
-0.4 < x < +0.6 and -0.2 < y < +0.2); and
a perovskite-type oxide represented by the compositional formula (VI): A²⁺B⁴⁺O_{3-δ} (-0.1 < δ < 0.1) and in which the A ion is at least one element selected from alkaline earth metal elements and the B ion is at least one element selected from lanthanoids, Group IVa elements and Group IVb elements. Incidentally, in this perovskite-type oxide, the reason why the value of δ is -0.1 < δ < 0.1 is that any oxides outside this range are not obtainable because of conditions of manufacture.

In the pyrochlore-related structural oxide represented by the compositional formula (III) : A₂₋ₓB₂₊ₓO_{8-2δ}, the oxygen ions having been inserted are readily movable and are active, and the oxygen ions can be inserted also to the position of oxygen deficiency or the interstitial position, as viewed from the fluorite-type structure. Hence, this oxide has numberless dissolution sites of oxygen ions, and has a very high catalytic activity. It has such characteristic features, and is a material having photocatalytic action effectively also in the visible-light range. The present inventors have already discovered these facts. Moreover, its light absorption properties can be controlled by substituting the A ions with cations having a lower valence or higher valence or substituting the B ions with cations having a lower valence or higher valence to change the amount of oxygen ions to be inserted, to change the energy band gap and the defect levels.

The oxide semiconductor (II) constituting the other component of the oxide composite may include, e.g., titanium oxide of a rutile type or an anatase type or a mixed type of these two, zinc oxide, tin oxide, zirconium oxide and strontium titanate.

Then, from Example 1 and so forth given later, in which a powder of the pyrochlore-related structural oxide represented by the compositional formula (III) : A₂₋ₓB₂₊ₓO_{8-2δ} (provided that -0.4 < x < +0.6 and -0.5 < 2δ < +0.5), Ce₂Zr₂O₈, is used as the oxide semiconductor (I) and a powder of the anatase-type titanium oxide is used as the oxide semiconductor (II), the following has been ascertained.

Stated specifically, the Ce₂Zr₂O₈ powder and the anatase-type titanium oxide powder were mixed in a weight ratio of Z: (1-Z) (provided that 0 < Z < 1) and the mixture obtained was subjected to firing at 700°C for 1 hour, followed by pulverization by means of a mortar to first prepare a powder (photocatalyst) according to Example 1.

The powder (photocatalyst) according to Example 1 was dispersed in an aqueous Methylene Blue solution and also the decolorization (bleaching) of Methylene Blue due to irradiation by light was tested.

Then, it has been ascertained that the photocatalytic properties of the powder (photocatalyst) according to Example 1 have greatly been improved on account of the appearance of the junction of semiconductors of different types (Ce₂Zr₂O₈ and anatase-type titanium oxide) that is attributable to the firing.

More specifically, in the middle of the bleaching, the color of a powder sample (a powder according to Example 1) turned deeply bluish as a result of the formation of the oxide composite comprised of Ce₂Zr₂O₈ and anatase-type titanium oxide according to Example 1, and the blueness of the sample disappeared at the time the bleaching was completed.

On the other hand, where only titanium oxide powder was used, i.e., Z = 0 (Comparative Example), the sample was always in white color both in the middle of the bleaching and at the time it was completed. Also, where only the pyrochlore-related structural oxide (Ce₂Zr₂O₈) powder was used, i.e., Z = 1, the sample was a little bluish in the middle of the bleaching and the blueness disappeared at the time the bleaching was completed.

From these results, it has been ascertained that the adsorption of Methylene Blue on the sample oxide composite (powder according to Example 1) is accelerated by the irradiation by light, that Methylene Blue is readily adsorbed onto the pyrochlore-related structural oxide constituting one component of the oxide composite, that the junction between it and the titanium oxide accelerates the adsorption of Methylene Blue onto the pyrochlore-related structural oxide, and that the improvement in photocatalytic properties which is attributable to the formation of oxides into a composite and the phenomenon of adsorption of Methylene Blue correlate deeply.

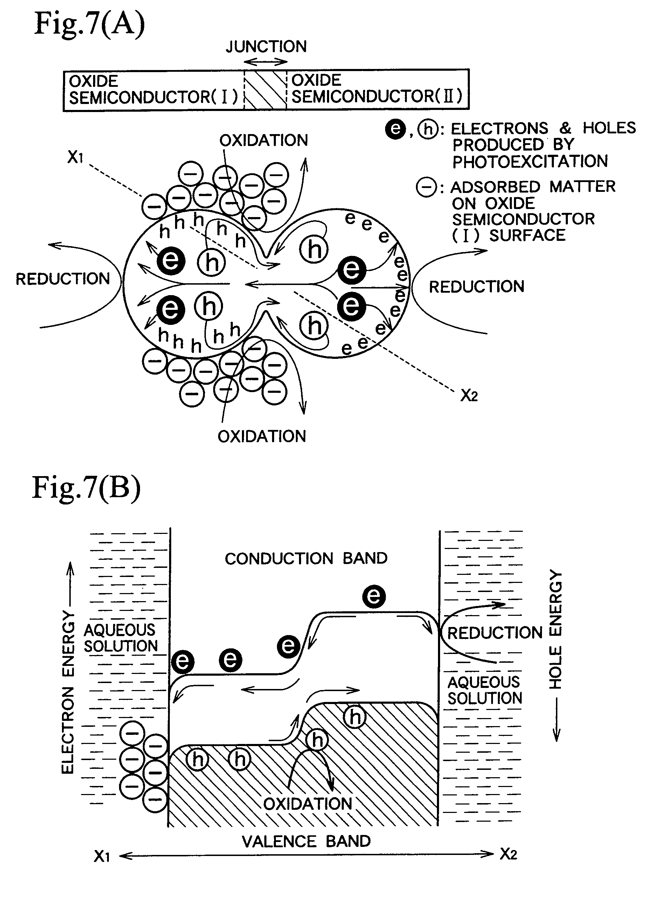

Now, it is known that, when the oxide semiconductors (I) and (II) whose energy levels of electrons at the bottom of the conduction band and energy levels of electrons at the top of the valence band in an energy band structure, based on the vacuum levels, differ from each other are joined, the electrons and holes flow commonly in one direction to each other in the vicinity of the junction. Here, the electrons and holes which flow at the junction show a stronger tendency of being separated from each other because of the phenomenon of adsorption accelerated by light irradiation. Such a phenomenon is influenced by whether the ions to be adsorbed are positive or negative. When the ions to be adsorbed are negative and when they are adsorbed on the oxide composite comprised of the pyrochlore-related structural oxide represented by the compositional formula (III): A₂₋ₓB₂₊ₓO_{8-2δ} and the titanium oxide, as conceptually illustrated in Fig. 7 (A) , the holes flow at the surface (the side coming into contact with the outside) of the junction, and electrons flow at the middle of the junction. Thus, separating the flows of electrons and holes at the junction leads to the spatial separation of electrons from holes in the whole oxide composite, so that the electrons and holes which have been photo-excited can be kept from their recombination. As the result, the position of reaction of the photocatalytic reaction in which these electrons and holes participate is spatially separated, and hence the photocatalyst improved sharply in catalytic activity in virtue of the junction can be provided, as so presumed. Also, Fig. 7 (B) illustrates energy band structure at the junction of the oxide composite in which the oxide semiconductor(I) is comprised of the pyrochlore-related structural oxide represented by the compositional formula (III) : A₂₋ₓB₂₊ₓO_{8-2δ} and the titanium oxide.

In addition, the combination of the oxide semiconductors (I) and (II) may be changed in variety. This enables, e.g., control of the energy of electrons and holes which participate in the photocatalytic reaction taking place in the vicinity of a heterojunction or homojunction. Making up oxide composites having a junction formed by oxide semiconductors of different types or the same type brings about various advantages. Incidentally, the junction of the oxide composite comprised of the pyrochlore-related structural oxide represented by the compositional formula (III): A₂₋ₓB₂₊ₓO_{8-2δ} and the titanium oxide is a junction between oxide semiconductors of different types, and hence it is a heterojunction.

As examples of other oxide composite having such a heterojunction, it may include:
an oxide composite comprised of a p-type oxide semiconductor perovskite-type oxide doped with an acceptor and a p-type oxide semiconductor titanium oxide doped with nitrogen; the perovskite-type oxide having photocatalytic properties even in the visible-light range and being represented by the compositional formula: A²⁺B⁴⁺₁₋ₓC³⁺ₓO_{3-δ} (provided that 0 < x ≤ 0.5 and 0 < δ < 0.5), which has been doped with cations C having a lower valence than B ions, within the range of 50 mol% at the maximum, and in which the A ion is constituted of at least one element selected from alkaline earth metal elements, the B ion at least one element selected from lanthanoids, Group IVa elements and Group IVb elements and the C ion at least one element selected from lanthanoids, Group IIIa elements and Group IIIb elements; and
an oxide composite comprised of a perovskite-type oxide not doped with an acceptor and a titanium oxide or a titanium oxide doped with nitrogen; the perovskite-type oxide having photocatalytic properties even in the visible-light range and being represented by the compositional formula (VI) : A²⁺B⁴⁺O_{3-δ} (-0.1 < δ < 0.1) in which the A ion is constituted of at least one element selected from alkaline earth metal elements and the B ion at least one element selected from lanthanoids, Group IVa elements and Group IVb elements.

As the homojunction, which is a junction between oxide semiconductors of the same type, it may include, e.g., an oxide composite obtained by mixing and pulverizing titanium nitride (TiN) and titanium oxide (TiO₂), followed by firing and again pulverization. It is presumed that the titanium oxide has been oxidized as a result of the reaction at the time of preparation to provide a form in which the titanium oxide has been doped with nitrogen. Thus, this oxide composite is comprised of a titanium oxide doped with nitrogen and a titanium oxide not doped with nitrogen (i.e., semiconductors of the same type).

Here, the pyrochlore-type oxide represented by the compositional formula (IV) : A₂₋ₓB₂₊ₓO_{7+(x/2)+y}, which serves as a precursor of the pyrochlore-related structural oxide represented by the compositional formula (III) : A₂₋ₓB₂₊ₓO_{8-2δ}, the perovskite-type oxide doped with an acceptor and represented by the compositional formula: A²⁺B⁴⁺₁₋ₓC³⁺ₓO_{3-δ} (provided that 0 < x ≤ 0.5 and 0 < δ < 0.5) and the perovskite-type oxide not doped with an acceptor and represented by the compositional formula (VI): A²⁺B⁴⁺O_{3-δ} (-0.1 < δ < 0.1), which have been exemplified as the oxide semiconductor (I) having photocatalytic properties even in the visible-light range, may be synthesized by a conventional solid-phase process, i.e., by mixing raw-material oxides or carbonates of the corresponding metallic components and a salt such as a nitrate in the intended compositional ratio, followed by firing. It may also be synthesized by other wet-process or gaseous-phase process.

Here, in, e.g., ZrO₂ available at present, approximately from 0.9 to 2.0 mol% of HfO₂ is inevitably contained, and the ZrO₂ is weighed in the state the HfO₂ is contained, which, however, does not make poor the properties of the photocatalyst prepared finally.

Now, in practice, when the pyrochlore-related structural oxide represented by the compositional formula (III) : A₂₋ₓB₂₊ₓO_{8-2δ} is obtained, a phase of the compositional formula (V) : t'-A_{0.5-(x/4)}B_{0.5+(x/4)}O₂, which is a strained fluorite-type structural oxide, is first produced as an intermediate oxide, and then this phase of the compositional formula (V) : t'-A_{0.5-(x/4)}B_{0.5+(x/4)}O₂ is reduced to produce the pyrochlore-type oxide of the compositional formula (IV): A₂₋ₓB₂₊ₓO_{7+(x/2)+y}. Subsequently, this pyrochlore-type oxide is oxidized to insert oxygen, whereupon the pyrochlore-related structural oxide represented by the compositional formula (III): A₂₋ₓB₂₊ₓO_{8-2δ} (provided that -0.4 < x < +0.6 and -0.5 < 2δ < +0.5), is obtained. Here, even when any different phase stands mixed in the t' phase represented by the compositional formula (V), there is no problem as long as the different phase is in a small quantity in the pyrochlore-type oxide A₂₋ₓB₂₊ₓO_{7+(x/2)+y} obtained by the subsequent reduction. Also, the course of making the intermediate oxide of the compositional formula (V): t'-A_{0.5-(x/4)}B_{0.5+(x/4)}O₂ may be omitted, where the starting raw-material powders are mixed, and then reacted in a reducing atmosphere to directly produce the pyrochlore-type oxide of the compositional formula (IV) : A₂₋ₓB₂₊ₓO_{7+(x/2)+y}, followed by the subsequent oxidation treatment to obtain the pyrochlore-related structural oxide represented by the like compositional formula (III) : A₂₋ₓB₂₊ₓO_{8-2δ} (provided that -0.4 < x < +0.6 and -0.5 < 2δ < +0.5).

First, to obtain the oxide serving as the intermediate oxide, represented by the compositional formula (V): t'-A_{0.5-(x/4)}B_{0.5+(x/4)}O₂, the starting rawmaterials are weighed, and then mixed by means of a ball mill or the like. The mixture obtained is green-compact molded into a disk of about 15 to 20 mm in diameter, followed by firing at 1, 500 to 1, 750°C for 30 to 70 hours in an oxygen-containing gas such as air to obtain the oxide represented by the compositional formula (V) : t'-A_{0.5-(x/4)}B_{0.5+(x/4)}O₂. Next, the oxide thus produced is pulverized into powder with an average particle diameter of 1 to 2 mm. This is put on rhodium/platinum foil to make heat treatment at 500 to 700°C for about 5 hours in a stream of oxygen to adjust oxygen content.

Next, this t' phase is reduced at 700 to 1,350°C for 10 to 20 hours in a stream of 1%H₂/Ar or 5%H₂/Ar. After the reduction treatment, the sample is taken out and its mass is precisely weighed to determine the oxygen content in the resultant pyrochlore-type oxide of the compositional formula (IV) : A₂₋ₓB₂₊ₓO_{7+(x/2)+y} on the basis of a change in mass from the phase of the compositional formula (V): t'-A_{0.5-(x/4)}B_{0.5+(x/4)}O₂ before the reduction treatment. Here, the y in the compositional formula (IV) : A₂₋ₓB₂₊ₓO_{7+(x/2)+y} is the content showing a portion which changes depending on the valences of the A ion and B ion and the content of these ions in the pyrochlore-type oxide. Where the valence of the A ion is smaller than 3 and the valence of the B ion is smaller than 4, the y is a negative number. Also, depending on conditions of manufacture, a part of A ions may come around the position of the B ion, or a part of B ions may come around the position of the A ion, according to which the value of y may change. Here, if the value of y is smaller than -0.2 or larger than +0.2, the oxide can no longer retain the pyrochlore-type structure. Accordingly, in the compositional formula (IV), the y must be -0.2 < y < +0.2.

Thereafter, the above pyrochlore-type oxide is put on rhodium/platinum foil to make heat treatment at 300 to 900°C for about 5 hours in a stream of oxygen, whereby oxygen ions can be inserted as the regular arrangement of cations is retained, thus the pyrochlore-related structural oxide represented by the compositional formula (III) : A₂₋ₓB₂₊ₓO_{8-2δ} (provided that -0.4 < x < +0.6 and -0.5 < 2δ < +0.5) is obtained. Here, if the heat treatment is made at a temperature lower than 300°C, the oxygen may not sufficiently be inserted to crystals. If on the other hand it is made at a temperature higher than 900°C, the regular arrangement of cations may be destroyed to come into random arrangement. If the value of x is -0.4 > x or +0.6 < x, any different phase may become deposited in a large quantity, resulting in a low photocatalytic performance.

The pyrochlore-related structural oxide thus obtained is pulverized by means of a mortar or the like to make it into powder, and the powder obtained is mixed with a powder of anatase-type titanium oxide obtained by a conventional method as shown in Comparative Example given later. The latter is weighed in the proportion of Z: (1-Z) (provided that 0 < Z < 1) in weight ratio, and the both is mixed by means of a mortar, a ball mill or the like.

The sample obtained by mixing them is fired for about 5 minutes to about 1 hour at 300 to 1,200°C to prepare the oxide composite having the junction formed by oxide semiconductors of different types. If the firing temperature is lower than 300°C, any good junction may not be obtainable. If it is higher than 1,200°C, a reaction phase of a different type may be formed, resulting in a low photocatalytic performance of the oxide composite.

Then, as to the shape of the photocatalyst according to the present invention, the photocatalyst may preferably comprise particles having a large specific surface area so that the light can effectively be utilized. In general, it is suitable for the particles to have a particle diameter of from 0.1 to 10 µm, and preferably from 0.1 to 1 µm. As a means conventionally used to obtain the powder of the oxide composite having such a particle diameter, first the respective oxide semiconductors are each manually pulverized by means of a mortar, or pulverized by means of a ball mill or a planetary tumbling ball mill. The two kinds of powders thus obtained are weighed and mixed and the mixture formed is fired to obtain the oxide composite having the junction, followed by pulverization again carried out to obtain a final sample powder.

The present invention is specifically described below by giving Examples. Note, however, that the present invention is by no means limited to the following Examples.

### Example 1

### Preparation of sample:

### - Production of t'-A_{0.5-(x/4)}B_{0.5+(x/4)}O₂ Phase -

### (Raw materials)

CeO₂ powder (a product of Santoku Kinzoku Kogyo K.K.; purity: 99.99%, ig.-loss: 3.75%): 1.2353 g.
ZrO₂ powder (a product of Santoku Kinzoku Kogyo K.K.; purity: 99.60%, comprised of ZrO₂ + HfO₂; ig.-loss: 0.45%) : 0.8551 g.

In the foregoing, "ig.-loss" indicates a loss due to water content, absorbed matter and so forth.

### (Mixing)

1. The powder samples having been weighed were dry-process mixed for 15 minutes by means of an agate mortar.
2. Zirconia balls and the sample obtained by the mixing were put into a glass bottle, followed by pulverization and mixing for 20 hours by means of a ball mill.

### (Molding)

The pulverized mixture obtained was molded at a pressure of 100 MPa into a disk of 17 mm in diameter.

### (Firing)

The sample obtained was put into a crucible made of rhodium/platinum, and fired at 1, 650°C for 50 hours in the atmosphere to produce a t'-Ce_{0.5}Zr_{0.5}O₂ phase.

### - Production of Pyrochlore-type A₂₋ₓB₂₊ₓO_{7+(x/2)+y} -

### (Pulverization)

The sintered product of the t'-Ce_{0.5}Zr_{0.5}O₂ phase was pulverized by means of an agate mortar into powder with an average particle diameter of 1 to 2 mm.

### (Adjustment of oxygen content)

This was put on rhodium/platinum foil to make heat treatment at 600°C for 5 hours in a stream of oxygen to adjust oxygen content. Here, as a result of the treatment to adjust the oxygen content in the t'-Ce_{0.5}Zr_{0.5}O₂ phase, most of trivalent Ce contained partly in the t'-Ce_{0.5}Zr_{0.5}O₂ phase is adjusted to tetravalent Ce.

### (Reduction)

Next, this t'-Ce_{0.5}Zr_{0.5}O₂ phase was reduced at 1,300°C for 10 hours in a stream of 5%H₂/Ar. Here, as a result of this reduction treatment, most of Ce adjusted to tetravalent Ce in the t'-Ce_{0.5}Zr_{0.5}O₂ phase is adjusted to trivalent Ce and this phase comes to a pyrochlore phase.

### (Determination of oxygen content in pyrochlore phase)

After the reduction treatment, the sample was taken out and its mass was precisely weighed to determine the oxygen content in the pyrochlore phase on the basis of a change in mass from the t'-Ce_{0.5}Zr_{0.5}O₂ before the reduction treatment, to find that it came to Ce₂Zr₂O_{7.02}.

### - Production of A₂₋ₓB₂₊ₓO_{8-2δ} Phase -

### (Oxidation)

The pyrochlore-type phase (pyrochlore-type oxide) obtained after the reduction treatment was put on rhodium/platinum foil to make heat treatment at 600°C for 5 hours in a stream of oxygen to adjust oxygen content. Thus, a pyrochlore-related structural oxide Ce₂Zr₂O_{8.0} [oxide semiconductor (I)] was obtained.

### - Production of Anatase-type Titanium Oxide -

Using a titanium sulfate solution, a precipitate of a hydroxide was formed using ammonia as an alkali treatment solution, and also this precipitate was subjected to firing in the atmosphere under conditions of 650°C for 1 hour to obtain an anatase-type titanium oxide [oxide semiconductor (II)].

### - Production of Oxide Composite -

### (Mixing)

The anatase-type titanium oxide [oxide semiconductor (II) and the Ce₂Zr₂O_{8.0} pyrochlore-related structural oxide [oxide semiconductor (I)] which were prepared by the above method were collected in a weight ratio shown below, and were dry-process mixed for 30 minutes by means of a zirconia mortar.

| | |
|---|---|
| Titanium oxide | 0.7086 g, Ce₂Zr₂O_{8.0}: 0.3285 g (weight ratio: 68:32). |
| Titanium oxide | 0.4000 g, Ce₂Zr₂O_{8.0}: 0.1000 g (weight ratio: 80:20). |
| Titanium oxide | 0.4500 g, Ce₂Zr₂O_{8.0}: 0.0500 g (weight ratio: 90:10). |

### (Firing)

The samples obtained by the mixing were each put into a crucible made of rhodium/platinum, and fired at 700°C for 1 hour in the atmosphere.

### (Pulverization)

The fired products obtained were each dry-process pulverized for 30 minutes by means of a zirconia mortar to obtain sample powders.

### Example 2

### - Preparation of CaZrO_{3-δ} -

### (Raw materials)

CaCO₃ powder (a product of Kohjundo Kagaku Kenkyusho K.K.; purity: 99.99%, ig.-loss: 0.04%): 4.3115 g.

ZrO₂ powder (a product of Santoku Kinzoku Kogyo K.K.; purity: 99.60%, comprised of ZrO₂ + HfO₂; ig.-loss: 0.51%) : 5.3714 g.

### (Mixing)

1. The powder samples having been weighed were mixed for 1.5 hours with addition of ethanol, using a mortar made of zirconia.
2. The sample obtained by the mixing was dried and then put into a pot made of zirconia, followed by pulverization for 40 minutes by means of a planetary tumbling ball mill.

### (Drying)

The sample having been pulverized was dried at 120°C for 30 minutes or more in a thermostatic chamber.

### (Calcination)

The sample having been dried was put in a crucible made of rhodium/platinum, and calcined at 1,350°C for 10 hours in the atmosphere.

### (Re-pulverization/mixing/drying)

After the calcination, the sample was again pulverized by means of a mortar, followed by mixing by means of the planetary tumbling ball mill. Thereafter, the mixture obtained was dried under the same conditions as the above drying.

### (Molding)

The dried powder obtained was molded at a pressure of 265 MPa into a disk of 17 mm in diameter.

### (Firing)

The sample having been molded was put into a crucible made of rhodium/platinum, and fired at 1, 650°C for 50 hours in the atmosphere.

### (Pulverization)

After the firing, the sample was pulverized for 1 hour by means of a zirconia mortar to obtain a sample powder. The fired product had composition of CaZrO_{3-δ} (the value of δ is a numerical value of within -0.1 < δ < 0.1; the same applies hereinafter).

### - Production of Oxide Composite -

Anatase-type TiO₂ [oxide semiconductor (II)] prepared in the same manner as in Example 1 and CaZrO_{3-δ} [oxide semiconductor (I)] were collected in a weight ratio shown below, and were dry-process mixed for 30 minutes by means of a zirconia mortar, followed by the same subsequent procedure in Example 1 to obtain sample powders.

| | |
|---|---|
| Titanium oxide | 0.7103 g, CaZrO_{3-δ}: 0.3825 g (weight ratio: 65:35). |
| Titanium oxide | 0.6888 g, CaZrO_{3-δ}: 0.1722 g (weight ratio: 80:20). |
| Titanium oxide | 0.6300 g, CaZrO_{3-δ}: 0.0701 g (weight ratio: 90:10). |

### Example 3

### - Preparation of SrZrO_{3-δ} -

SrZrO_{3-δ} was prepared in the same manner as in Example 2 except that the following raw materials were used.

### (Raw materials)

SrCO₃ powder (a product of Kohjundo Kagaku Kenkyusho K.K.; purity: 99.99%, ig.-loss: 0.04%): 4.8910 g.

ZrO₂ powder (a product of Santoku Kinzoku Kogyo K.K.; purity: 99.60%, comprised of ZrO₂ + HfO₂; ig.-loss: 0.49%) : 5.8335 g.

### - Production of Oxide Composite -

Anatase-type TiO₂ [oxide semiconductor (II)] prepared in the same manner as in Example 1 and SrZrO_{3-δ} [oxide semiconductor (I)] were collected in a weight ratio shown below, and were dry-process mixed for 30 minutes by means of a zirconia mortar, followed by the same subsequent procedure in Example 1 to obtain a sample powder.

| | |
|---|---|
| Titanium oxide | 0.4743 g, SrZrO_{3-δ}: 0.0527 g (weight ratio: 90:10). |

### Example 4

### - Preparation of SrCeO_{3-δ} -

SrCeO_{3-δ} was prepared in the same manner as in Example 2 except that the following raw materials were used and the calcination and firing were carried out in the following manner.

### (Raw materials)

SrCO₃ powder (a product of Kohjundo Kagaku Kenkyusho K.K.; purity: 99.99%, ig.-loss: 0.04%): 6.3198 g.

CeO₂ powder (a product of Santoku Kinzoku Kogyo K.K.; purity: 99.99%, comprised of ZrO₂ + HfO₂; ig.-loss: 3.33%) : 5.2428 g.

### (Calcination)

The sample having been dried was put in a crucible made of rhodium/platinum, and calcined at 1,400°C for 10 hours in the atmosphere.

### (Firing)

The sample having been molded was put into a crucible made of rhodium/platinum, and fired at 1,500°C for 50 hours in the atmosphere.

### - Production of Oxide Composite -

Anatase-type TiO₂ [oxide semiconductor (II)] prepared in the same manner as in Example 1 and SrCeO_{3-δ} [oxide semiconductor (I)] were collected in a weight ratio shown below, and were dry-process mixed for 30 minutes by means of a zirconia mortar, followed by the same subsequent procedure in Example 1 to obtain a sample powder.

| | |
|---|---|
| Titanium oxide | 0.6634 g, SrCeO_{3-δ}: 0.0737 g (weight ratio: 90:10). |

### Example 5

### - Preparation of SrTiO_{3-δ} -

### (Raw materials)

SrCO₃ powder (a product of Kohjundo Kagaku Kenkyusho K.K.; purity: 99.9%, ig.-loss: 0.08%): 5.8284 g.

TiO₂ powder (anatase type, a product of Rare Metallic; purity: 99.99%; ig.-loss: 0.84%): 3.1774 g.

### (Mixing)

1. The powder samples having been weighed were mixed for 1.5 hours with addition of ethanol, using a mortar made of zirconia.
2. The sample obtained by the mixing was dried and then put into a pot made of zirconia, followed by pulverization for 40 minutes by means of a planetary tumbling ball mill.

### (Drying)

The sample having been pulverized was dried at 120°C for 30 minutes or more in a thermostatic chamber.

### (Calcination)

The sample having been dried was put in a crucible made of rhodium/platinum, and calcined at 1,350°C for 10 hours in the atmosphere.

### (Re-pulverization/mixing/drying)

After the calcination, the sample was again pulverized by means of a mortar, followed by mixing by means of the planetary tumbling ball mill. Thereafter, the mixture obtained was dried under the same conditions as the above drying.

### (Molding)

The dried powder obtained was molded at a pressure of 265 MPa into a disk of 17 mm in diameter.

### (Firing)

The sample having been molded was put into a crucible made of rhodium/platinum, and fired at 1, 650°C for 50 hours in the atmosphere.

### (Pulverization)

After the firing, the sample was pulverized for 1 hour by means of a zirconia mortar to obtain a sample powder.

### - Production of Oxide Composite -

Anatase-type TiO₂ [ST-01, a product of Ishihara Sangyo Kaisha, Ltd.; purity: 99.99%, ig.-loss: 15.1%; oxide semiconductor (II)] and SrTiO_{3-δ} [oxide semiconductor (I)] were collected in a weight ratio shown below, and were dry-process mixed for 30 minutes by means of a zirconia mortar. Since, however, the "ig.-loss" of the anatase-type TiO₂ was 15.1%, the value 15.1% of the "ig.-loss" was taken into account when the materials were collected.

| | |
|---|---|
| Titanium oxide | 1.1380 g, SrTiO_{3-δ}: 0.1074 g (weight ratio: 90:10). |

### (Firing)

The sample obtained by the mixing was put into a crucible made of rhodium/platinum, and fired at 700°C for 1 hour in the atmosphere.

### (Pulverization)

The fired product obtained was dry-process pulverized for 5 minutes by means of a zirconia mortar to obtain a sample powder.

### Example 6

### - Preparation of Sn₂Nb₂O₇ -

Sn₂Nb₂O₇ was prepared in the same manner as the method of producing a precursor of the pyrochlore-related structural oxide shown in Example 1 (i.e., the method of producing the Ce₂Zr₂O_{7.02} from the t'-Ce_{0.5}Zr_{0.5}O₂ in Example 1).

### - Production of Oxide Composite -

The Sn₂Nb₂O₇ thus obtained [oxide semiconductor (I)] and anatase-type TiO₂ [ST-01, a product of Ishihara Sangyo Kaisha, Ltd.; purity: 99.99%, ig.-loss: 15.1%; oxide semiconductor (II)] were collected in a weight ratio of oxide semiconductor (II):oxide semiconductor (I) = 7:3, and were dry-process mixed for 30 minutes by means of a zirconia mortar. Since, however, the "ig.-loss" of the anatase-type TiO₂ was 15.1%, the value 15.1% of the "ig.-loss" was taken into account when the materials were collected.

| | |
|---|---|
| Titanium oxide | 0.5593 g, Sn₂Nb₂O₇: 0.2035 g (weight ratio: 90:10). |

### (Firing)

The sample obtained by the mixing was put into a crucible made of rhodium/platinum, which was then set in a container made of SiO₂ glass. Next, the inside of the container was evacuated by means of an oil diffusion pump to bring it into a vacuum of 1 x 10⁻⁴ Pa or less, followed by firing at 400°C for 1 hour.

### (Pulverization)

The fired product obtained was dry-process pulverized for 5 minutes by means of a zirconia mortar to obtain a sample powder.

### Comparative Example

Using a titanium sulfate solution, a precipitate of a hydroxide was formed using ammonia as an alkali treatment solution, and also this precipitate was subjected to firing in the atmosphere under conditions of 650°C for 1 hour to obtain an anatase-type titanium oxide (conventional photocatalyst).

### Evaluation of Photocatalytic Action

The catalytic activity of the photocatalysts according to Examples 1 to 6 and Comparative Example was evaluated by a photo-bleaching method using an aqueous Methylene Blue (MB) solution.

This is a method in which an aqueous Methylene Blue solution and a measuring sample (each of the photocatalysts according to Examples 1 to 6 and Comparative Example) are put into the same container, and then irradiated by light to examine with a spectrophotometer the extent to which the Methylene Blue decomposes by the photocatalytic effect.

### (Preparation of aqueous Methylene Blue solution)

Methylene Blue (guaranteed reagent, available from Kanto Chemical Co., Inc.)
Ultrapure water (resistivity: 18.2 MΩ·cm or more) 7.48 mg of the above Methylene Blue was precisely weighed, and the whole was dissolved in 1 liter of the ultrapure water using a measuring flask to make up an aqueous solution of 2.0 x 10⁻⁵ mol/liter (mol·dm⁻³) of Methylene Blue.

### (Light irradiation)

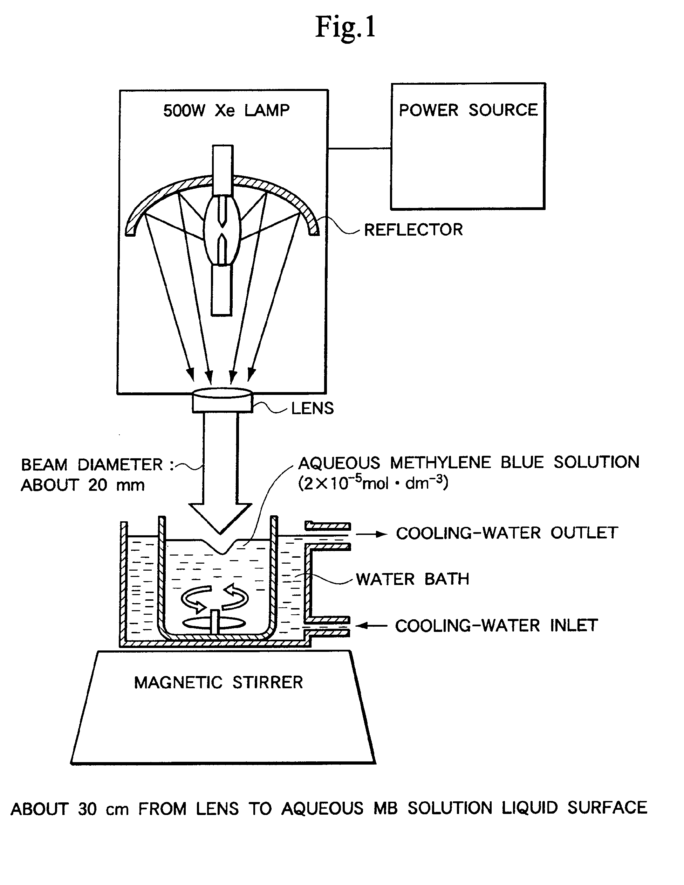

A. Laboratory Equipment
   A schematic view of an equipment is shown in Fig. 1. Light source: A 500 W xenon lamp of a lower-part irradiation type.
   Spectrophotometer: U4000 spectrophotometer, manufactured by Hitachi Ltd.
B. Sample Solution
   0.20 g of each of the photocatalysts (samples) according to Examples 1 to 6 and Comparative Example was dispersed in 200 cm³ of the aqueous Methylene Blue solution by means of a magnetic stirrer.

The aqueous Methylene Blue solutions in which the respective samples were kept dispersed were each collected in a quartz cell, and their transmission spectra were each measured with the spectrophotometer.

The samples having been subjected to measurement were restored, and the stirring and light irradiation were repeated thereon, where the transmission spectra were measured at every lapse of time to determine their absorbance.

The rate of bleaching was evaluated by a reciprocal of time for which the absorbance changed from 1.0 to 0.1.

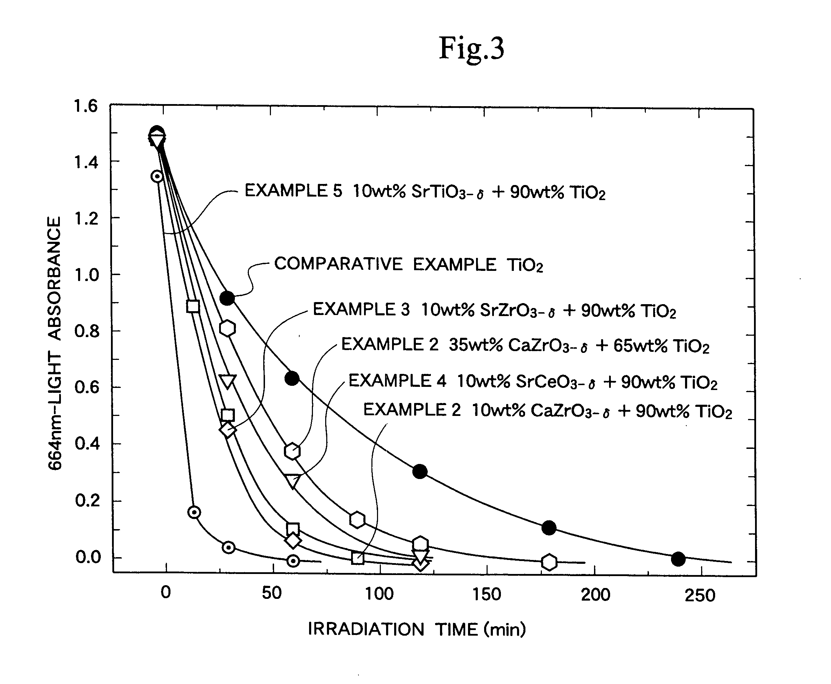

Here, changes in absorbance at 664 nm with respect to the lapse of time (irradiation time) in the case when the photocatalyst (sample) according to Example 5 was used were as follows: 0 hour: 1.3869; after 15 minutes: 0.1731; after 30 minutes: 0.0464; and after 1 hour: 0.0061 (see Fig. 3) .

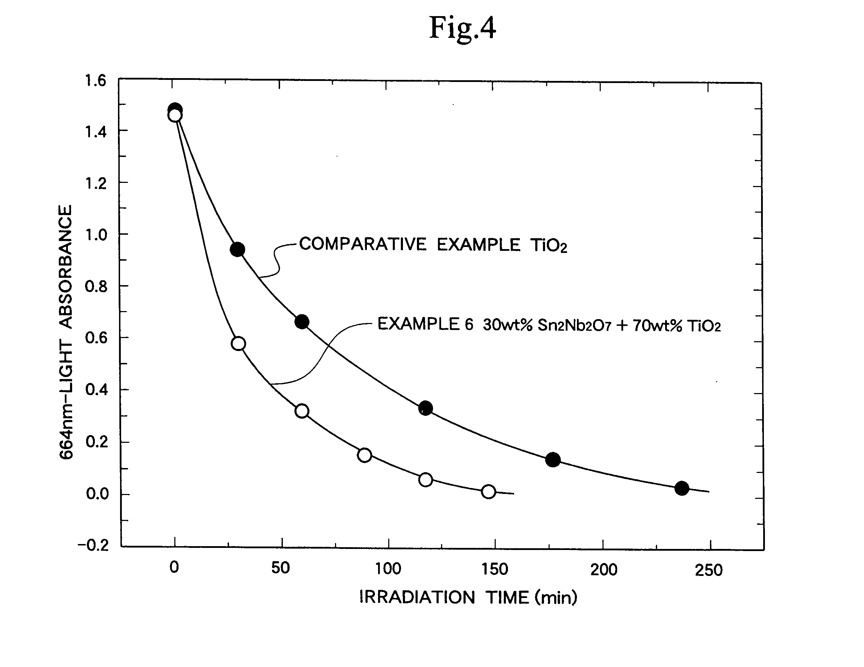

Changes in absorbance at 664 nm with respect to the lapse of time (irradiation time) in the case when the photocatalyst (sample) according to Example 6 was used were also as follows: 0 hour: 1.4553; after 30 minutes: 0.5891; after 60 minutes: 0.3230; and after 90 minutes: 0.1543 (see Fig. 4).

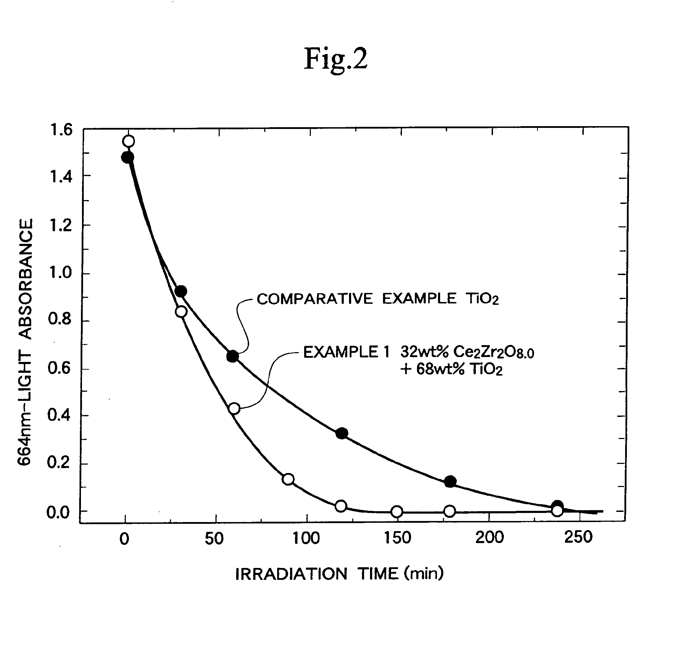

The results of these are shown in Table 1 and by graphic representation in Figs. 2 to 4.

**Table 1**

| Type of oxide semiconductor (I) | Content of oxide semiconductor (I) | Time taken for bleaching during which absorbance changes from 1.0 to 0.1 |
|---|---|---|
| | (wt.%) | (min.) |
| Example 1: | | |
| | 32 | 91 |
| Ce₂Zr₂O₈ | 20 | 82 |
| | 10 | 74 |
| Example 2: | | |
| | 35 | 105 |
| CaZrO_{3-δ} | 20 | 100 |
| | 10 | 90 |
| Example 3: | | |
| SrZrO_{3-δ} | 10 | 55 |
| Example 4: | | |
| SrCeO_{3-δ} | 10 | 85 |
| Example 5: | | |
| SrTiO_{3-δ} | 10 | 20 |
| Example 6: | | |
| Sn₂Nb₂O₇ | 30 | 110 |
| Comparative Example: | | |
| Anatase-type TiO₂ only | - | 148 |

### Confirmation

As can be seen from Table 1 and the graphic representation in Figs. 2 to 4, in the case when the photocatalysts (samples) according to Examples are used, the time taken for bleaching during which the absorbance changes from 1.0 to 0.1 is shorter than that of the photocatalyst (sample) according to Comparative Example. It is confirmed therefrom that the photocatalysts (samples) according to Examples 1 to 6 have catalytic activity superior to that of the photocatalyst (sample) according to Comparative Example.

### POSSIBILITY OF INDUSTRIAL APPLICATION

As described above, the photocatalyst according to the present invention can exhibit a high catalytic function in the visible-light range, and is suited as a photocatalyst used for decomposition treatment of environmental pollutants, deodorization, stainproofing, antimicrobial treatment, antifogging and so forth.

## Claims

1. A photocatalyst having catalytic activity even in the visible-light range; the photocatalyst comprising an oxide composite having a junction formed by oxide semiconductors (I) and (II) which have photocatalytic properties with each other and whose energy levels of electrons at the bottom of the conduction band and energy levels of electrons at the top of the valence band in an energy band structure, based on the vacuum levels, differ from each other; at least one of the oxide semiconductors having photocatalytic properties even in the visible-light range.

2. The photocatalyst having catalytic activity even in the visible-light range according to claim 1, wherein said oxide semiconductor (II) has photocatalytic properties in a shorter wavelength range than the oxide semiconductor (I) .

3. The photocatalyst having catalytic activity even in the visible-light range according to claim 1 or 2, wherein said oxide semiconductor (I) having photocatalytic properties even in the visible-light range has properties that it adsorbs molecules and ions which participate in photocatalytic reaction at the time of irradiation by light.

4. The photocatalyst having catalytic activity even in the visible-light range according to claim 1, 2 or 3, wherein said oxide composite has been obtained by blending the oxide semiconductors (I) and (II) in a weight ratio of Z: (1-Z) (provided that 0 < Z < 1), followed by firing under conditions of from 300°C to 1,200°C.

5. The photocatalyst having catalytic activity even in the visible-light range according to claim 1, 2, 3 or 4, wherein;
said oxide semiconductor (I) comprises a pyrochlore-related structural oxide which is represented by the compositional formula (III): A₂₋ₓB₂₊ₓO_{8-2δ} (provided that -0.4 < x < +0. 6 and -0.5 < 2δ < +0.5) and in which oxygen ions have been inserted to at least one of the position of oxygen deficiency and the interstitial position, as viewed from a fluorite-type structure of a pyrochlore-type oxide represented by the compositional formula (IV): A₂₋ₓB₂₊ₓO_{7+(x/2)+y} (provided that -0.4 < x < +0.6 and -0.2 < y < +0.2) in which A ions and B ions which may assume a plurality of valences are each regularly arranged; and
said oxide semiconductor (II) comprises any of titanium oxide of a rutile type or an anatase type or a mixed type of these two, zinc oxide, tin oxide, zirconium oxide and strontium titanate.

6. The photocatalyst having catalytic activity even in the visible-light range according to claim 5, wherein, in the compositional formula (III): A₂₋ₓB₂₊ₓO_{8-2δ}, which represents said pyrochlore-related structural oxide;
the A ion is at least one element of lanthanoids which may assume a plurality of valences, or to which element at least one element selected from divalent alkaline earth metal elements, trivalent lanthanoids and yttrium has been added ; and
the B ion is at least one element selected from Group IVa elements and Group IVb elements which may assume the valence of 4, or to which element at least one element selected from yttrium, Group IIIb elements and Group Va elements has been added.

7. The photocatalyst having catalytic activity even in the visible-light range according to claim 5 or 6, wherein said pyrochlore-related structural oxide represented by the compositional formula (III): A₂₋ₓB₂₊ₓO_{8-2δ} has been obtained by oxidation-treating a pyrochlore-type oxide represented by the compositional formula (IV): A₂₋ₓB₂₊ₓO_{7+(x/2)+y} under conditions of from 300°C to 900°C in an oxygen-containing gas.

8. The photocatalyst having catalytic activity even in the visible-light range according to claim 5, 6 or 7, wherein, in the compositional formula (III): A₂₋ₓB₂₊ₓO_{8-2δ}, which represents said pyrochlore-related structural oxide, the A ion is at least one element selected from Ce and Pr, and the B ion is at least one element selected from Zr and Hf.

9. The photocatalyst having catalytic activity even in the visible-light range according to claim 1, 2, 3 or 4, wherein;
said oxide semiconductor (I) comprises a pyrochlore-type oxide represented by the compositional formula (IV) : A₂₋ₓB₂₊ₓO_{7+(x/2)+y} (provided that -0.4 < x < +0.6 and -0.2 < y < +0.2); and
said oxide semiconductor (II) comprises any of titanium oxide of a rutile type or an anatase type or a mixed type of these two, zinc oxide, tin oxide, zirconium oxide and strontium titanate.

10. The photocatalyst having catalytic activity even in the visible-light range according to claim 9, wherein, in the compositional formula (IV) : A₂₋ₓB₂₊ₓO_{7+(x/2)+y} (provided that -0.4 < x < +0.6 and -0.2 < y < +0.2), which represents said pyrochlore-type oxide, the A ion is at least one element selected from Sn and Ca, and the B ion is at least one element selected from Nb and Ta.

11. The photocatalyst having catalytic activity even in the visible-light range according to claim 1, 2, 3 or 4, wherein;
said oxide semiconductor (I) comprises a perovskite-type oxide represented by the compositional formula (VI): A²⁺B⁴⁺O_{3-δ} (-0.1 < δ < 0.1) and in which the A ion is at least one element selected from alkaline earth metal elements and the B ion is at least one element selected from lanthanoids, Group IVa elements and Group IVb elements; and
said oxide semiconductor (II) comprises any of titanium oxide of a rutile type or an anatase type or a mixed type of these two, zinc oxide, tin oxide, zirconium oxide and strontium titanate.

12. The photocatalyst having catalytic activity even in the visible-light range according to claim 11, wherein, in the compositional formula (VI): A²⁺B⁴⁺O_{3-δ}, the A ion is at least one element selected from Ca, Sr and Ba, and the B ion is at least one element selected from Zr, Ce and Ti.
